# EUROPÄISCHE PATENTSCHRIFT

(11) **EP 2 017 131 B1**
(45) Veröffentlichungstag und Bekanntmachung des Hinweises auf die Patenterteilung: **14.06.2017**
(21) Anmeldenummer: 08011751.8
(22) Anmeldetag: 28.06.2008
(51) Int. Cl.: B60R 9/06, B60R 9/10

(54) **Lastenträger für ein Kraftfahrzeug**
Load carrier for a motor vehicle
Support de charge pour un véhicule automobile

(30) Priorität: 11.07.2007 DE 102007033015
(43) Veröffentlichungstag der Anmeldung: 21.01.2009
(73) Patentinhaber: WESTFALIA - Automotive GmbH, 33378 Rheda-Wiedenbrück (DE)
(72) Erfinder: Aufderheide, Reinhold, 33397 Riedberg (DE); Hermbusch, Gerhard, 33449 Langenberg (DE); Peitz, Jürgen, 33378 Rheda-Wiedenbrück (DE)
(74) Vertreter: Patentanwälte Bregenzer und Reule Partnerschaftsgesellschaft mbB

(56) Entgegenhaltungen:
- WO-A1-97/37872
- DE-A1-102004 021 709
- DE-U1- 9 311 905
- GB-A- 2 425 997
- US-A- 4 400 129

## Beschreibung

Die Erfindung betrifft einen Lastenträger für ein Kraftfahrzeug, insbesondere einen Personenkraftwagen, mit einem zum Tragen einer Last vorgesehenen Ladegestell, das in einer Gebrauchsstellung des Lastenträgers nach hinten vor einen Heckbereich des Kraftfahrzeugs vorsteht und einen in einer Gebrauchstellung des Lastenträgers im Wesentlichen horizontalen Ladebereich zum Aufladen einer Last bereitstellt, wobei der Lastenträger eine in der Gebrauchsstellung im Wesentlichen vertikale Stütze zum Halten der Last aufweist gemäß dem Oberbegriff des Anspruchs 1.

Ein solcher Lastenträger ist aus US 4400129A bekannt.

Auf das Ladegestell eines aus der der europäischen Patentanmeldung EP 08 008 299 bekannten Lastenträgers können Lasten, beispielsweise Fahrräder, Skier oder dergleichen, aufgelegt werden. Die Stütze, die beispielsweise einen Bügel, ein vertikal stehendes Rohr oder dergleichen umfasst, dient zum Stützen und Halten der Last auf dem Ladegestell.

Zur besseren Verstau- und Transportierbarkeit des Lastenträgers sind an dem bekannten Lastenträger bewegliche Lastenträgerbauteile angeordnet, z.B. Fahrradträgerrinnen oder Schwenkteile angeordnet, die in einer vor das Ladegestell vorstehenden Gebrauchsstellung zum Aufstellen der Fahrräder und einer Nichtgebrauchsstellung oder Staustellung verschwenkbar sind, bei denen die Schwenkteile in einem Innenraum des Ladegestells angeordnet sind. Ferner ist das Ladegestell bezüglich der Tragstruktur schwenkbar.

In den jeweiligen Gebrauchsstellungen sind diese beweglichen Lastenträgerteile, beispielsweise die Schwenk-Fahrradträgerrinnen oder das Ladegestell, mittels einer Verriegelungseinrichtung ortsfest verriegelbar. Der Bediener betätigt die Verriegelungseinrichtung unmittelbar vor Ort, beispielsweise durch Drücken einer Raste, einer Klinke oder dergleichen. Dies ist unkomfortabel. Ferner sind die Verriegelungseinrichtungen in der Regel in einem unteren, schwer zugänglichen Bereich des Lastenträgers angeordnet. Der Lastenträger selbst ist in der Fahrstellung, wenn er hinter dem Fahrzeug montiert ist, relativ weit unten positioniert, so dass die Betätigung der Verriegelungseinrichtung(en) schwer ist. Zudem ist ein Lastenträger nach einem Fahrbetrieb in der Regel verschmutzt, so dass der Bediener beim Betätigen der jeweiligen Verriegelungseinrichtung schmutzige Hände bekommt.

Es ist daher die Aufgabe der vorliegenden Erfindung, einen Lastenträger bereitzustellen, der bequem und komfortabel bedienbar ist.

Zur Lösung der Aufgabe ist ein Lastenträger gemäß der technischen Lehre des Anspruchs 1 vorgesehen.

Der erfindungsgemäße Grundgedanke ist, dass eine Handbetätigungseinrichtung nicht im schwer ergreifbaren, unteren Bereich eines Lastenträgers angeordnet ist, sondern verhältnismäßig weit oben, nämlich an einem oberen, weit von dem Ladebereich entfernten Endbereich der Stütze. Die Stütze ragt in der Regel weit über den Ladebereich nach oben vor, um der auf den Lastenträger aufgelegten Last einen optimalen Halt zu gewährleisten. Die Stütze hat erfindungsgemäß eine Doppelfunktion, nämlich zum einen das Halten der Last in an sich bekannter Weise, und zum andern die Funktion eines Trägers für die Handbetätigungseinrichtung, beispielsweise eines Hebels, eines Schiebers, eines Zugbetätigungsteils oder dergleichen. Die Handbetätigungseinrichtung steht also an einem bequem ergreifbaren Ort zur Verfügung. Das Übertragungsglied überträgt die Betätigungsbewegung der Handbetätigungseinrichtung auf das Verriegelungselement, das vor Ort bei dem beweglichen, zu verriegelnden Lastenträgerbauteil ist.

Das bewegliche Lastenträgerbauteil ist vorteilhafterweise das Ladegestell, das an einer Tragstruktur des Lastenträgers beweglich gelagert ist. Das Ladegestell kann zwischen einer für einen Fahrbetrieb des Kraftfahrzeugs vorgesehenen Fahrstellung und einer Ladestellung schwenkbar, verschieblich oder in sonstiger Weise beweglich an dem Tragegestell gelagert sein. Beispielsweise ist es möglich, dass das Ladegestell von der Tragstruktur entfernt wird, um die Last auf das Ladegestell aufzuladen. Aber auch ein Schwenkbereich zum Aufschwenken beispielsweise einer Heckklappe des Kraftfahrzeuges kann durch das Ladegestell freigegeben werden, wenn es in der Ladestellung ist.

Das bewegliche Lastenträgerbauteil umfasst die Stütze, an der die Handbetätigungseinrichtung erfindungsgemäß angeordnet ist.

Das mindestens eine Übertragungsglied ist ein biegeflexibles Zugorgan. Dieses kann beispielsweise ein Seilzug, ein Bowdenzug oder dergleichen sein. Aber auch ein Zugriemen, ein Zugseil oder dergleichen sind möglich.

Das Übertragungsglied, zweckmäßigerweise jedes Übertragungsglied zwischen Handbetätigungseinrichtung und Verriegelungseinrichtung, ist zweckmäßigerweise in einem Innenraum der Stütze angeordnet. In dem Innenraum ist das jeweilige Übertragungsglied vor Umwelteinflüssen geschützt, beispielsweise vor mechanischer Beschädigung. Vorzugsweise handelt es sich bei diesem Innenraum um einen Innenhohlraum der Stütze.

Das Übertragungsglied kann auch ein Übertragungsgetriebe umfassen. Das Übertragungsgetriebe enthält vorzugsweise ein Umlenkgetriebe, um eine Kraftrichtung umzulenken. Aber auch eine Übersetzung oder Untersetzung der Betätigungsbewegung durch ein entsprechendes Über- oder Untersetzungsgetriebe ist prinzipiell möglich.

Ferner kann das Übertragungsglied auch eine Klinke oder ein sonstiges Verdrängerorgan umfassen, mit dem es das Verriegelungselement aus einer Verriegelungsaufnahme verdrängt. Das Verdrängerorgan ist beispielsweise dem Verriegelungselement gegenüberliegend hinter der Verriegelungsaufnahme angeordnet und verdrängt somit das Verriegelungselement aus der Verriegelungsaufnahme.

Bei einer anderen Bauform, die im Ausführungsbeispiel jedoch nicht im Einzelnen beschrieben ist, kann das Übertragungsglied auch unmittelbar mit dem Verriegelungselement bewegungsgekoppelt sein. Beispielsweise kann der vorgenannte Seilzug beziehungsweise das biegeflexible Zugorgan unmittelbar mit dem Verriegelungselement verbunden sein.

Das Verriegelungselement ist zweckmäßigerweise in seine das mindestens eine bewegliche Lastenträgerbauteil verriegelnde Verriegelungsstellung federbelastet. Vorzugsweise rastet das Verriegelungselement zweckmäßigerweise in die Verriegelungsstellung ein. Eine Verriegelungsbetätigung von außen, beispielsweise mit der Handbetätigungseinrichtung, ist dann nicht nötig, aber möglich.

Erfindungsgemäß wird die Stütze durch einen Bügel, insbesondere einen U-förmigen Bügel, gebildet. Der Bügel ist zweckmäßigerweise im Wesentlichen rund oder gerundet, was das Verletzungsrisiko vermindert. Prinzipiell wären aber auch winkelige Bügel möglich.

Die Handbetätigungseinrichtung ist erfindungsgemäß an einem oberen Querabschnitt des Bügels angeordnet. Dabei kann die Handbetätigungseinrichtung beispielsweise an der Oberseite, vorzugsweise jedoch an der Unterseite des Querabschnittes angeordnet sein. Es wäre aber auch möglich, die Handbetätigungseinrichtung(en) an einem oder beiden Seitenschenkeln des Bügels anzuordnen.

In diesem Zusammenhang sei betont, dass auch mehrere Handbetätigungseinrichtungen an der Stütze vorgesehen sein können. Vorzugsweise ist dann jede Handbetätigungseinrichtung einer jeweiligen Verriegelungseinrichtung zugeordnet. Vorteilhaft ist es allerdings, mit einer Handbetätigungseinrichtung mehrere Verriegelungseinrichtungen zu betätigen.

Die Handbetätigungseinrichtung umfasst zweckmäßigerweise einen zwischen einer Verriegelungsstellung und einer Freigabestellung schwenkbaren Betätigungshebel. Alternativ sind aber auch Schieber, Drehknäufe, Druckorgane oder dergleichen als Handbetätigungselemente möglich.

Die Stütze ist vorzugsweise mit dem Ladegestell fest oder gelenkig verbunden oder lösbar verbindbar. Die Stütze selbst ist vorzugsweise mittels einer Stützen-Verriegelungseinrichtung an dem Lastenträger, zum Beispiel dem Ladegestell, zumindest in der Gebrauchsstellung verriegelbar. Es wäre zum Beispiel möglich, die Stütze direkt an der Tragstruktur anzuordnen. Vorzugsweise ist die Stütze jedoch an dem Ladegestell in der Gebrauchsstellung angeordnet. Somit bildet die Stütze nicht nur einen Träger für die bequem ergreifbare Handbetätigungseinrichtung, sondern kann auch als Handgriff zum Bewegen des Ladegestells, beispielsweise zum Schwenken oder Schieben in die Ladestellung oder die Fahrstellung, verwendet werden.

Die Stütze ist vorzugsweise mittels einer Steckverbindung an dem Lastenträger, beispielsweise dem Ladegestell oder der Tragstruktur, befestigbar. Es ist andererseits aber auch möglich, dass die Stütze beispielsweise mittels eines Schwenklagers oder eines Schiebelagers zwischen einer Gebrauchsstellung und einer Nichtgebrauchsstellung schwenkbar beziehungsweise schiebbar verschieblich an dem Lastenträger gelagert ist. Auch die Schwenklagerung und/oder Schiebelagerung ist vorzugsweise an dem Ladegestell vorgesehen. In der Nichtgebrauchsstellung kann die Stütze somit platzsparend beispielsweise auf dem Ladebereich aufliegen. Jedenfalls ist die Stütze in der Nichtgebrauchsstellung zweckmäßigerweise in Richtung des Ladebereichs geschwenkt.

Als Stützen-Verriegelungseinrichtung sind zweckmäßigerweise eine Klemmschraube, ein federbelasteter Klemmhebel, eine Raste oder dergleichen vorgesehen.

Das mindestens eine bewegliche Lastenträgerbauteil kann aber auch ein an dem Ladegestell beweglich gelagertes oder von dem Ladegestell sogar entfernbares Lasttragteil zum Auflegen der Last umfassen. Beispielsweise ist das Lasttragteil ein Bestandteil einer Schwenkteilanordnung mit mindestens einem Schwenkteil zum Erweitern des Ladebereichs. Das Schwenkteil oder die Schwenkteile sind mit einem Schwenkteil-Lagerbereich an einem Ladegestell-Lagerbereich des Ladegestells zwischen einer Gebrauchsstellung und einer Nichtgebrauchsstellung schwenkbeweglich gelagert. Bei dem Schwenkteil handelt es sich vorzugsweise um eine Fahrradträgerrinne. Es ist möglich, mehrere Fahrradträgerrinnen miteinander durch eine Koppeleinrichtung, beispielsweise einen Querverbinder, zu koppeln, so dass die gekoppelten Schwenkteile durch Ergreifen nur eines der Schwenkteil simultan schwenkbar sind.

Der Lastenträger kann ortsfest an dem Kraftfahrzeug angeordnet sein. Zweckmäßigerweise hat er eine Halterung zum lösbaren Anordnen an einer Anhängekupplung des Kraftfahrzeugs, beispielsweise einem Kugelhals der Anhängekupplung. Das Ladegestell kann aber auch beweglich an dem Kraftfahrzeug gelagert sein, und zwar zwischen einer nach hinten vor das Kraftfahrzeug vorstehenden Gebrauchsstellung und einer hinter oder vor einer Karosseriekontur des Kraftfahrzeugs verborgenen Nichtgebrauchsstellung. Beispielsweise ist der Lastenträger schwenkbar, verschieblich oder beides an dem Kraftfahrzeug gelagert.

Eine an sich eigenständige Erfindung bei einem Lastenträger für ein Kraftfahrzeug mit einem zum Tragen einer Last vorgesehenen Ladegestell stellt es dar, wenn an einem am Ladegestell beweglich zwischen einer Gebrauchsstellung und einer Nichtgebrauchsstellung beweglich, insbesondere verschieblich und/oder schwenkar, gelagerten Lasttragteil zum Erweitern des Ladebereichs, beispielsweise des vorgenannten Schwenkteils, insbesondere der Fahrradträgerrinne, ein Leuchtmittel oder Leuchtorgan angeordnet ist. Somit ist es möglich, die Leuchte und das Lasttragteil mittels einer einzigen Betätigungshandlung zwischen der Gebrauchsstellung und der Nichtgebrauchsstellung zu verstellen. In der Gebrauchsstellung steht die Leuchte relativ weit seitlich vor das Ladegestell vor und signalisiert so die Außenkontur des Kraftfahrzeuges. Es versteht sich, dass es ebenfalls im Sinne einer eigenständigen Erfindung ist, wenn die Leuchte an einem bezüglich des Ladegestells zwischen einer Gebrauchsstellung und einer Nichtgebrauchsstellung verschieblichen Lasttragteil angeordnet ist.

Ebenfalls eine an sich eigenständige Erfindung stellt es dar, wenn an einem Lastenträger für ein Kraftfahrzeug mit einem zum Tragen einer Last vorgesehenen Ladegestell eine Leuchte mittels eines Spiralkabels mit einem Kontaktstecker zum Anstecken an ein Bordnetz des Kraftfahrzeuges verbunden ist. Somit ist es möglich, die Leuchte flexibel an verschiedenen Orten, beispielsweise an einem Lasttragteil zum Auflegen der Last, anzuordnen. Bei der vorgenannten Maßnahme, bei der die Leuchte an dem Schwenk-Lasttragteil angeordnet ist, ist das Spiralkabel besonders vorteilhaft, weil es die entsprechende Schwenkbewegung mitmacht.

Weiterhin ist es vorteilhaft, wenn bei einem erfindungsgemäßen Lastenträger oder bei einem Lastenträger für ein Kraftfahrzeug der eingangs genannten Art, das heißt nach den oberbegrifflichen Merkmalen des Anspruchs 1 jedoch auch ohne Stütze, ein Kennzeichenträger schwenkbeweglich befestigt ist. Somit ist es möglich, den Kennzeichenträger zwischen einer nach hinten gerichteten Fahrstellung, bei der das Kennzeichen von horizontal hinten gut erkennbar ist, und einer Nichtgebrauchsstellung zu verschwenken, in der der Kennzeichenträger wenig Platz benötigt.

Nachfolgend werden Ausführungsbeispiele der Erfindung anhand der Zeichnung erläutert. Es zeigen:
- Figur 1a: eine perspektivische Schrägansicht eines erfindungsgemäßen Lastenträgers in Gebrauchsstellung mit ausgeschwenkten Schwenkteilen und einer hochstehenden Stütze,
- Figur 1b: den Lastenträger gemäß Figur 1a mit entfernter Stütze,
- Figur 2: eine teilweise Schrägansicht des Lastenträgers gemäß Figuren 1a, 1b, wobei ein Ladegestell von einer Tragstruktur des Lastenträgers in eine Ladestellung weggeschwenkt ist,
- Figur 3: den Lastenträger gemäß Figur 1a mit einem schematisch angedeuteten eingeklappten Schwenkteil,
- Figur 4: den Lastenträger gemäß Figur 3 mit einem hochgeschwenkten Kennzeichenträger,
- Figur 5: den Lastenträger gemäß den vorgenannten Figuren mit einer an einem Schwenkteil angeordneten Leuchte,
- Figur 6a: ein zweites Ausführungsbeispiel eines erfindungsgemäßen Lastenträgers mit einer schwenkbaren Stütze in Gebrauchsstellung,
- Figur 6b: den Lastenträger gemäß Figur 6a mit der Stütze in Nichtgebrauchsstellung,
- Figur 7: eine Querschnittsansicht der Stütze des Lastenträgers gemäß Figur 1a, etwa entlang einer Schnittlinie A-A in Figur 3, und
- Figur 8: eine Querschnittsansicht durch die Stütze gemäß Figur 7, etwa entlang einer Schnittlinie B-B in Figur 7, zur Veranschaulichung der Handbetätigungseinrichtung.

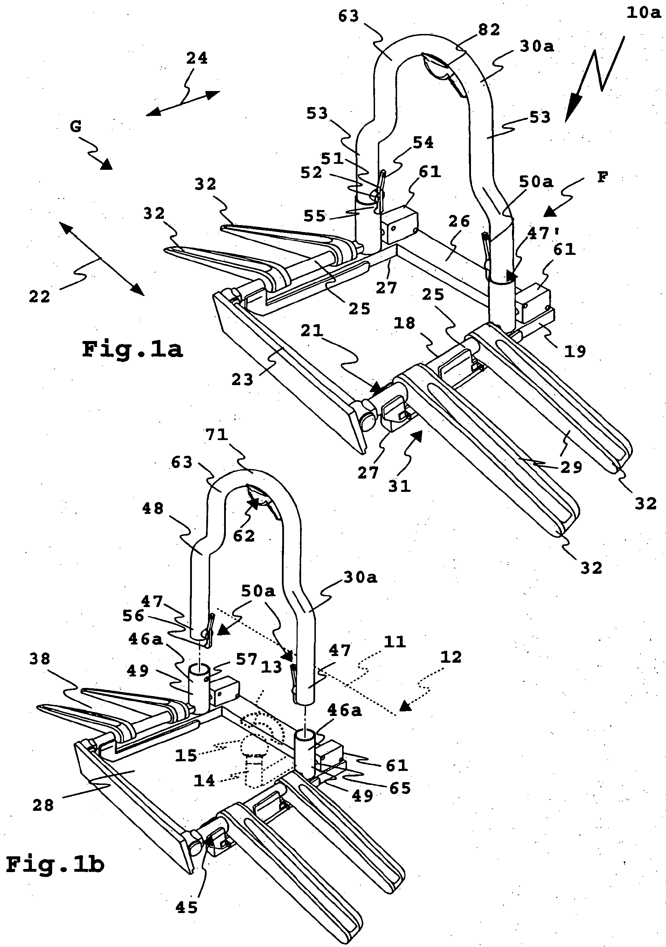

Lastenträger 10a, 10b zum Aufladen einer Last, beispielsweise von nicht dargestellten Fahrrädern, sind an einem Heckbereich 11 eines Kraftfahrzeuges 12 befestigbar. Die Lastenträger 10a, 10b haben z.B. eine in Figur 1b schematisch dargestellte Befestigungseinrichtung 13 zur Befestigung an einem Kupplungsarm 14 einer Anhängekupplung 15 des Kraftfahrzeugs 12. Wenn die Lastenträger 10a, 10b an der Anhängekupplung 15 befestigt sind, stehen sie nach hinten vor den Heckbereich 11 vor, so dass auf dem jeweiligen Lastenträger 10a, 10b eine Last abgelegt werden kann.

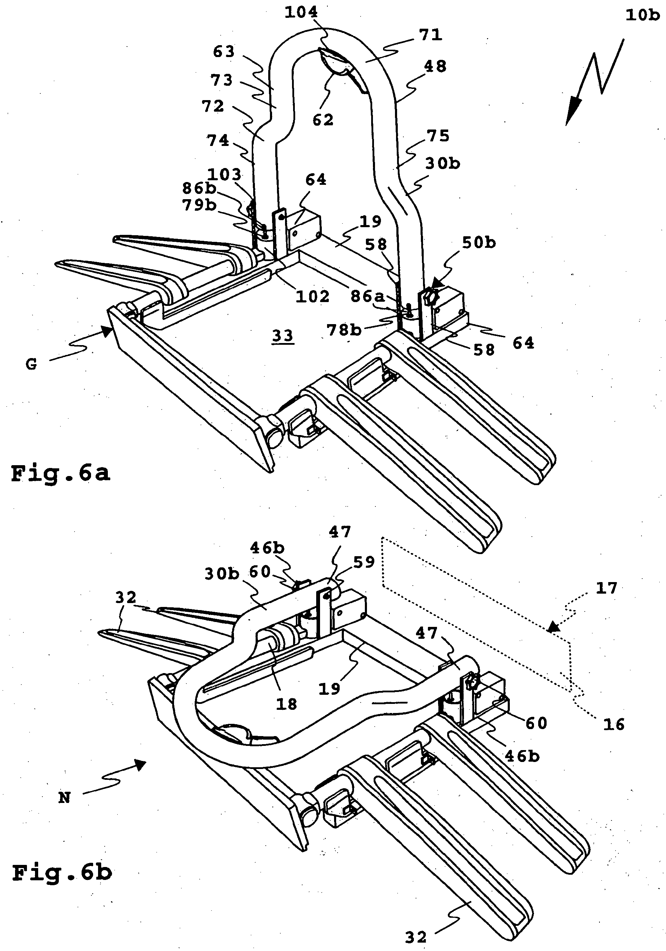

Die Lastenträger 10a, 10b können aber auch z.B. an nicht dargestellten Schiebeelementen, z.B. Teleskopstangen, verschieblich an einer Karosserie 17 des Kraftfahrzeugs 12 gelagert sein (Figur 6b). Die Lastenträger 10a, 10b sind z.B. an in der Zeichnung nicht dargestellten Führungen geführt, beispielsweise Gleitführungen, Rollenführungen oder dergleichen. Die Lastenträger 10a, 10b können z.B. in der Art einer Schublade für einen Nichtgebrauch in einen Aufnahmeraum 16 einer Karosserie 17 des Kraftfahrzeugs 12 eingeschoben werden, z.B. hinter einem Stoßfänger verborgen, so dass die Lastenträger 10a, 10b in einer Nichtgebrauchsstellung vor eine Außenkontur des Kraftfahrzeuges 12 nicht oder nur unwesentlich vorstehen.

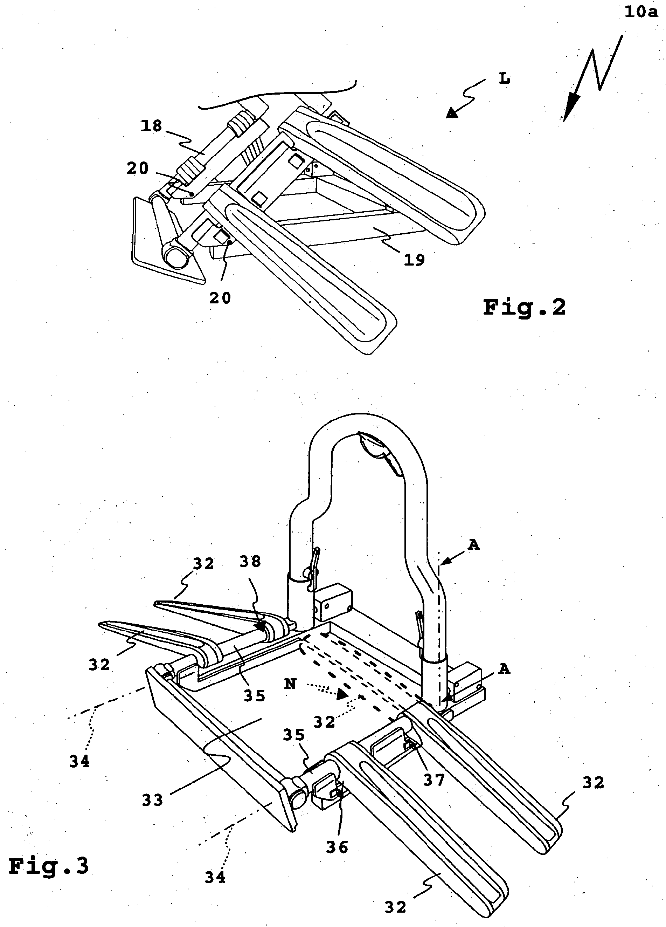

Ein Ladegestell 18 der Lastenträger 10a, 10b ist an einer Tragstruktur 19 zwischen einer für einen Fahrbetrieb des Kraftfahrzeugs 12 vorgesehenen Fahrstellung F (Figur 1a) und einer zum Be- und Entladen des Kraftfahrzeugs 12 oder der Lastenträger 10a, 10b vorgesehenen Ladestellung L (Figur 2) beweglich gelagert, z.B. mit Schwenkgelenken 20 schwenkbar. Die Schwenkgelenke 20 sind an einem vom Kraftfahrzeug 12 entfernten Bereich der Lastenträger 10a, 10b angeordnet, so dass in der Ladestellung L z.B. ein Schwenkbereich für eine Heckklappe des Kraftfahrzeugs 12 frei wird.

Das Ladegestell 18 und die Tragstruktur 19 haben eine U-förmige Gestalt, wobei weitere oder weniger Querstreben möglich sind.

Ein Ladegestellrahmen 21 des Ladegestells 18 umfasst einen in Fahrzeug-Querrichtung 22 verlaufenden Querträger 23, der zwei in Fahrzeug-Längsrichtung 24 verlaufende Längsschenkel 25 verbindet. Die Tragstruktur 19 umfasst korrespondierend einen in Fahrzeug-Querrichtung 22 verlaufenden Querträger 26, von dem Längsschenkel 27 parallel zur Fahrzeug-Längsrichtung 24 abstehen.

In der Fahrstellung F liegen die Längsschenkel 25, 27 aufeinander auf. Die Querträger 23, 26 sind an einander entgegengesetzten Längsenden des Lastenträgers 10 angeordnet, wobei der Querträger 23 weiter vom Heckbereich 11 entfernt ist als der Querträger 26, wenn der Lastenträger 10a, 10b am Kraftfahrzeug 12 montiert ist. Mithin sind also die Tragstruktur 19 und das Ladegestell 18 in der Art gegensinnig orientierter U-Gestelle aufeinander positioniert.

Das Ladegestell 18 stellt einen im Wesentlichen horizontalen Ladebereich 28 zum Auflegen einer Last, beispielsweise Fahrrädern, bereit. Der Ladebereich 28 ist durch Lasttragteile 29 vergrößerbar. Beim Ausführungsbeispiel sind die Lasttragteile 29 beweglich an dem Lastenträger 10a, insbesondere dem Ladegestell 18, gelagert. Prinzipiell wären aber auch ansteckbare Lasttragteile, anschraubbare Lasttragteile oder dergleichen denkbar.

Von dem Ladebereich 28 steht vertikal eine Stütze 30a, 30b ab. An der vertikalen Stütze 30a, 30b kann die auf dem Ladebereich 28 angeordnete Last, zum Beispiel ein Fahrrad oder mehrere Fahrräder, befestigt werden. Dazu sind beispielsweise in Fahrzeug-Längsrichtung 24 vor die Stütze 30 vorstehende, nicht gezeigte Befestigungseinrichtungen vorhanden. Die Stützen 30a, 30b können zwischen einer Gebrauchsstellung G (Figuren 1a, 6a) und einer Nichtgebrauchsstellung (Figuren 1b, 6b) verstellt werden. Die Stütze 30a ist dazu an das Ladegestell 18 ansteckbar. Die Stütze 30b ist bezüglich des Ladegestells 18 schwenkbar (Figur 6b).

Zu einer platzsparenden Unterbringung der Lastenträger 10a, 10b sind weitere im Einzelnen beschriebenen Maßnahmen vorgesehen.

Die Lastenträger 10a, 10b enthalten eine Schwenkteilanordnung 31 mit Lasttragteile 29 bildenden Schwenkteilen 32, die zum Erweitern des Ladebereichs 28 an dem Ladegestell 18 schwenkbar gelagert sind. Die Schwenkteile 32 sind an dem Ladegestellrahmen 21 des Ladegestells 18 zwischen einer Nichtgebrauchsstellung N und einer Gebrauchsstellung G schwenkbar gelagert. Die Schwenkteile 32 schwenken um horizontale, in Fahrzeug-Längsrichtung 24 verlaufende Schwenkachsen 34.

In der Gebrauchsstellung G stehen die Schwenkteile 32 seitlich vor das Ladegestell 18 vor und vergrößern so den Ladebereich 28. Die Schwenkteile 32 stehen in der Gebrauchsstellung G in Querrichtung 22 des Kraftfahrzeugs 12 vor das Ladegestell 18 vor.

In der Nichtgebrauchsstellung N (Figur 3) hingegen sind die Schwenkteile 32 nach innen, in einen Innenbereich des Ladegestellrahmens 21 geschwenkt. Dort ist ein Aufbewahrungsraum 33 für die Schwenkteile 32 vorgesehen. Wenn die Schwenkteile 32 in den Aufbewahrungsraum 33 nach innen geschwenkt sind, stehen sie nicht vor den Ladegestellrahmen 21 vor, so dass das Ladegestell 18 in den Aufnahmeraum 116 des Kraftfahrzeugs 12 eingeschoben werden kann oder bequem mitgenommen werden kann.

Die beiden Längsschenkel 25 sind zweckmäßigerweise durch Trägerrohre 35 gebildet, die Schwenkteil-Lagerbereiche 36 der Schwenkteile 32 durchdringen. Beispielsweise ist das Trägerrohr 35 durch eine Lageraufnahme 37, zum Beispiel eine Bohrung, an einem jeweiligen Schwenkteil 32 durchgesteckt. Diese Bauweise ist besonders einfach. Die Schwenkteile 32 bestehen beispielsweise aus Kunststoff oder Metall. Sie sind vorzugsweise Gussteile. Separate Schwenklager mit Lagerböcken und dergleichen sind bei den Lastenträgern 10a, 10b somit nicht notwendig. Die Längsschenkel 25 stellen Ladegestell-Lagerbereiche 38 für die Schwenkteile 32 bereit.

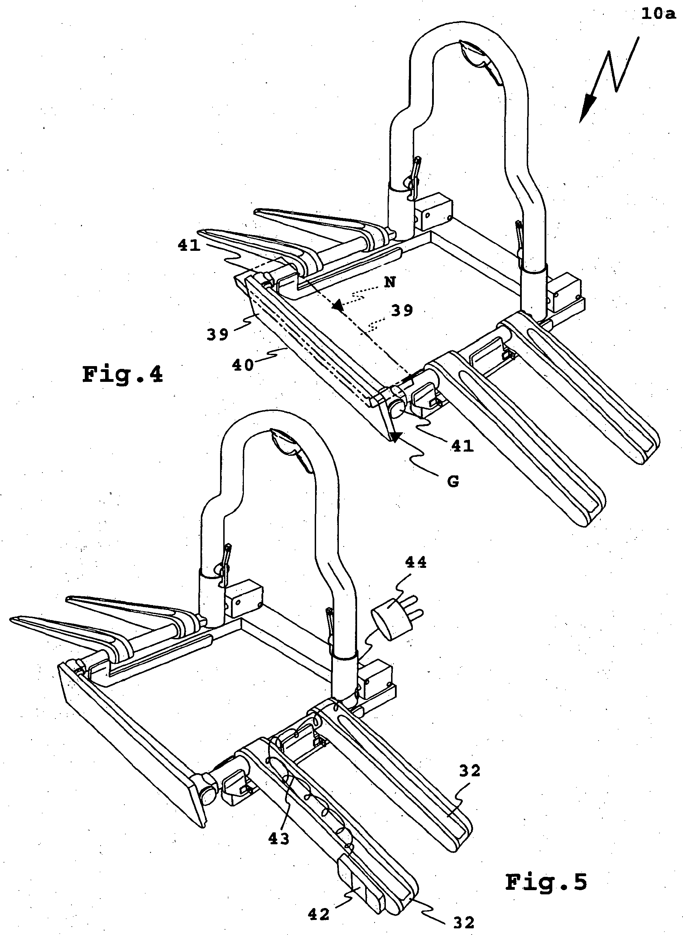

Weiterhin ist ein Kennzeichenträger 39 zwischen einer in Figur 4 mit durchgezogenen Linien gezeigten Gebrauchsstellung G und einer in gestrichelten Linien gezeigten Nichtgebrauchsstellung N verschwenkbar. In der Gebrauchsstellung G steht eine Trägerplatte 40 des Kennzeichenträgers 39 im Wesentlichen vertikal, so dass ein darauf angebrachtes, nicht dargestelltes Kennzeichen bequem ablesbar ist. In der Nichtgebrauchsstellung N hingegen benötigt der Kennzeichenträger 39 wenig Platz. Der Kennzeichenträger 39 ist beispielsweise nach oben oder unten in eine Horizontallage geschwenkt. Der Kennzeichenträger 39 ist mittels Schwenklagern 41 schwenkbar an dem Ladegestell 18 gelagert. Die Schwenklager 41 sind beispielsweise an den beiden Längsendbereichen des Querträgers 23 angeordnet.

Weiterhin ist es vorteilhaft, dass die Lastenträger 10a, 10b steckbare oder anbaubare Teile besitzen, die bei Nichtgebrauch entfernbar sind.

So kann beispielsweise eine Rückleuchte 42 mittels Magneten, nicht dargestellten Klemmen, Schrauben oder dergleichen an der jeweils vom Kraftfahrzeug 12 am weitesten entfernten Fahrradträgerrinne beziehungsweise Schwenkteil 32 angeordnet werden. Die Rückleuchte 42 kann dann bei Nichtgebrauch von dem Schwenkteil 32 entfernt werden. Selbstverständlich wird man in der Praxis zwei Rückleuchten 42 am Lastenträger 10a oder 10b anordnen, wobei zur Vereinfachung nur eine einzige Rückleuchte 42 in Figur 5 dargestellt ist.

Es versteht sich, dass die Rückleuchte 42 auch fest an dem Schwenkteil 32 montiert bleiben kann und somit beim Schwenken des Schwenkteils 32 mitschwenkt.

Auch die Kabelführung zu der Rückleuchte 42 ist flexibel und einfach handhabbar. Zwischen der Rückleuchte 42 und einem Anschlussstecker 44 zum Anschluss an ein Bordnetz des Kraftfahrzeugs 12 verläuft ein Spiralkabel 43. Zur besseren Sichtbarkeit ist das Spiralkabel 43 an der Oberseite des vorderen Schwenkteils 32 sowie entlang des Längsschenkels 25 dargestellt. Es versteht sich, dass man in der Praxis das Spiralkabel 43 in einem verdeckten Bereich, beispielsweise an der Unterseite des jeweiligen Schwenkteils 32, führen wird. Das Spiralkabel 43 ist insbesondere bei demjenigen Konzept vorteilhaft, bei dem die Rückleuchte 42 von dem Lastenträger 10a, 10b entfernbar ist.

Die Lastenträger 10a, 10b haben jedoch nicht nur in der Nichtgebrauchsstellung N eine kompakte, leicht verstaubare Bauform, sondern sind auch bequem handhabbar:
Das gegenüber der Tragstruktur 19 zwischen der Ladestellung L und der Fahrstellung F beweglich gelagerte Ladegestell 18 bildet ein bewegliches Lastenträgerbauteil 45. Der Bediener kann das Ladegestell 18 bequem schwenken, indem er die vertikal in der Gebrauchsstellung G hochstehende Stütze 30a, 30b ergreift. Die Stützen 30a, 30b sind nämlich im montierten Zustand beziehungsweise der Gebrauchsstellung G mit dem Ladegestell 18 unbeweglich fest verbunden.

An den von dem Querträger 23 abgewandten freien Enden der Längsschenkel 25 sind Stützlager 46a, 46b für die Stützen 30a, 30b vorgesehen. Die Stützlager 46a, 46b stützen freie Enden 47 der Stützen 30a, 30b. Die Stützen 30a, 30b sind vorliegend U-förmig. Die Stützen 30a, 30b enthalten dazu beispielsweise einen Bügel 48. Die freien Enden 47 sind mit dem Stützlager 46a lösbar verbindbar, während sie an dem Stützlager 46b schwenkbeweglich gelagert sind.

Die Stützlager 46a enthalten Steckaufnahmen 49, an die die freien Enden 47 der Stütze 30a ansteckbar, insbesondere einsteckbar sind. Die Steckaufnahmen 49 sind hohlzylindrisch und nach oben offen, so dass die freien Enden 47 des rohrartigen Bügels 48 in die Steckaufnahmen 49 einsteckbar sind.

Den Stützlagern 46a, 46b sind Stützen-Verriegelungseinrichtungen 50a, 50b zugeordnet, mit denen die Stützen 30a, 30b an den Stützlagern 46a, 46b verriegelbar sind. Dann sind die Stützen 30a fest mit dem Ladegestell 18 verbunden und können als Handgriff zum Schwenken des Ladegestells 18 dienen. An jedem Stützlager 46a, 46b ist jeweils eine Stützen-Verriegelungseinrichtung 50a, 50b angeordnet.

Die Stützen-Verriegelungseinrichtung 50a enthält einen Rasthebel 51, der mittels eines Schwenklagers 52 schwenkbeweglich am Bügel 48 gelagert ist, vorzugsweise in der Nähe des jeweiligen freien Endes 47. Die Rasthebel 51 sind zweckmäßigerweise an einander zugewandten Innenseiten von Seitenschenkeln 53 der Stützen 30a, 30b angeordnet, so dass sie vor Umwelteinflüssen, Fehlbetätigung und dergleichen geschützt sind.

Durch Drücken auf einen Betätigungsarm 54 des Rasthebels 51 in Richtung des Seitenschenkels 53 entgegen einer Federkraft einer in der Zeichnung nicht sichtbaren Feder kann ein an einem Haltearm 55 angeordneter Rastvorsprung 56 aus einer Rastaufnahme 57 an der jeweiligen Steckaufnahme 49 herausbewegt werden. Wenn so also die Stützen-Verriegelungseinrichtung 50a aus ihrer Verriegelungsstellung in ihre Entriegelungsstellung oder Freigabestellung verlagert ist, kann das jeweilige freie Ende 47 aus der Steckaufnahme 49 herausgezogen werden.

Beim Einstecken des freien Endes 47 in eine jeweilige Steckaufnahme 49 verriegelt die Stützen-Verriegelungseinrichtung 50a vorteilhaft von selbst. An dem Rastvorsprung 56 ist dazu vorteilhaft eine Gleitschräge vorhanden, die beim Einstecken der freien Enden 47 in die Steckaufnahme 49 beispielsweise an der Stirnseite der Steckaufnahme 49 nach außen auf eine Außenseite der Steckaufnahme 49 gleitet und somit den Rasthebel 51 in Richtung der Entriegelungsstellung / Freigabestellung schwenkt. Somit gleitet der Rasthebel 51 sozusagen außen auf die Steckaufnahme 49 auf. Aufgrund seiner Federbelastung rastet der Rasthebel 51 dann, wenn das freie Ende 47 in die Steckaufnahme 49 vollständig eingesteckt ist, selbsttätig in die vorgesehene Rastaufnahme 57.

Die Stützlager 46b enthalten jeweils zwei gabelartig hochstehende Haltearme 58, zwischen denen das jeweilige freie Ende 47 schwenkbar aufgenommen ist. Die freien Enden 47 sowie die Haltearme 58 sind jeweils von einer Schwenkwelle 59 durchdrungen. An einem Endbereich einer jeweiligen Schwenkwelle 59 ist eine Klemmmutter 60 aufgeschraubt, die zweckmäßigerweise ein Handgriffteil enthält oder von einem Handgriffteil gehalten wird. An dem Handgriffteil kann ein Bediener die Klemmmutter 60 festziehen, wobei die Schwenkwelle 59 als ein Zuganker wirkt und die beiden Haltearme 58 seitlich gegen den Bügel 48 gespannt werden. Auf diese Weise ist die Stütze 30b sowohl in der Nichtgebrauchsstellung N (Figur 6b) als auch in der Gebrauchsstellung G (Figur 6a) festlegbar. Das ein bewegliches Lastenträgerbauteil 45 bildende Ladegestell 18 ist mittels jeweils zwei Verriegelungseinrichtungen 61 verriegelbar. Die Verriegelungseinrichtungen 61 können mittels einer Handbetätigungseinrichtung 62 bequem betätigt werden, die in einem oberen Bereich 63 der Stützen 30a, 30b angeordnet ist.

Die Verriegelungseinrichtungen 61 enthalten jeweils ein in einem Lagergehäuse 64 linear verschieblich gelagertes Verriegelungselement 65. Das Verriegelungselement 65 ist durch eine Feder 66 in seine Verriegelungsstellung federbelastet, in der ein vorderes Ende des Verriegelungselements 65 in eine Verriegelungsaufnahme 67 am freien, unteren Endbereich eines jeweiligen Seitenschenkels 53 der Stütze 30a, 30b eingreift. Das Verriegelungselement 65 durchdringt dabei zudem noch eine mit der Verriegelungsaufnahme 67 fluchtende Durchgangsöffnung 68 an der Steckaufnahme 49. Die Feder 66 ist in einer Federkammer 69 des Lagergehäuses 64 angeordnet und stütz sich an ihrem einen Ende an dem Verriegelungselement 65 und an ihrem anderen Ende an einem die Federkammer 69 verschließenden Deckel 70 ab.

Die Verriegelungseinrichtungen 61 sind an der Tragstruktur 19 befestigt. Die Lagergehäuse 64 sind beispielsweise an Längsenden des Querträgers 26 angeordnet. Die Verriegelungselemente 65 sind axial in Richtung der Längsschenkel 25, 27 beweglich und greifen in der Verriegelungsstellung durch die Wände der Steckaufnahmen 49 hindurch in die Verriegelungsaufnahmen 67 in Front der Verriegelungseinrichtungen 61 ein.

Wenn das Ladegestell 18 in die Fahrstellung F geschwenkt wird, rasten die beiden Verriegelungselemente 65 in die Verriegelungsaufnahmen 67 an den Enden 47 selbsttätig ein, so dass das Ladegestell 18 in der Fahrstellung F verriegelt ist.

Gleichermaßen bequem kann das Ladegestell 18 auch wieder entriegelt werden, nämlich mit der erfindungsgemäß positionierten Handbetätigungseinrichtung 62. Die Handbetätigungseinrichtung 62 ist an einem oberen Querabschnitt 71 angeordnet, der die Seitenschenkel 53 miteinander verbindet. Der Querabschnitt 71 ist ergonomisch bogenförmig. Die Seitenschenkel 53 der Bügel 48 haben einen weiteren Krümmungsabschnitt 72 zwischen einem oberen, mit dem Querabschnitt 71 verbundenen Seitenschenkelabschnitt 73 und einem unteren, das freie Ende 47 aufweisenden Seitenschenkelabschnitt 74. Insgesamt ist der Bügel 48 aus einem durchgehenden, entsprechend biegeverformten Rohr 75 gebildet.

Zur Übertragung einer Betätigungsbewegung der Händbetätigungseinrichtung 62 auf die Verriegelungseinrichtungen 61 sind Übertragungsglieder 76 vorgesehen. Sämtliche Übertragungsglieder 76 sind geschützt in einem Innenhohlraum 77 des Rohrs 75 angeordnet.

Die Übertragungsglieder 76 umfassen Seilzüge 78a, 79a beim Lastenträger 10a sowie Seilzüge 78b, 79b beim Lastenträger 10b. Die Seilzüge 78a, 78b verlaufen in einem Seitenschenkel 53 des Bügels 48 von der Handbetätigungseinrichtung 62 in Richtung des freien Endes 47, die Seilzüge 79a, 79b im anderen Seitenschenkel 53. Die Seilzüge 78a-79b bilden Bestandteile eines Übertragungsgetriebes 80, beispielsweise eines Seilzuggetriebes.

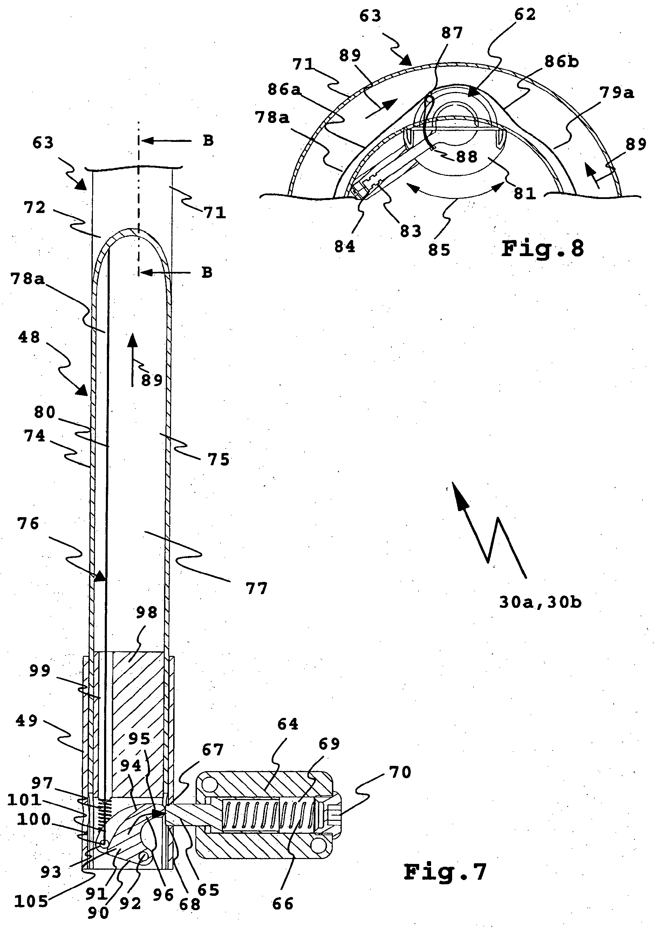

Die Seilzüge 78a, 79a, 78b, 79b sind mit einem drehbaren Zugbetätigungsteil 81, beispielsweise einer Rolle, zugfest verbunden. Das Zugbetätigungsteil 81 ist in einem Gehäuse 82 der Handbetätigungseinrichtung 62 schwenkbar gelagert. Das Gehäuse 82 ist in Figur 8 nicht dargestellt. Von dem Zugbetätiguhgsteil 81 steht ein zu einer Drehbetätigung vorgesehener Betätigungshebel 83 mit einem Handgriff 84 ab. Der Betätigungshebel 83 kann zwischen einer Verriegelungsstellung und einer Entriegelungsstellung entlang eines Schwenkwegs 85 geschwenkt werden.

Die Seile 86a, 86b sind über ein Umlenklager 87, beispielsweise einen Bolzen oder Stift, geführt und an einem Befestigungspunkt 88 am Zugbetätigungsteil 81 ortsfest festgelegt, beispielsweise angeklemmt. Das Seil 86b erfährt am Umlenklager 87 keine Zugumkehr, sondern ist lediglich über das Umlenklager 87 hinweggeführt. Das andere Seil 86a hingegen erfährt am Umlenklager 87 eine Richtungsumkehr. Somit bewirkt ein Schwenken des Betätigungshebels 83 nach rechts eine Zugbetätigung der Seile 86a, 86b in Richtung einer Zugrichtung 89. Dabei werden die Seile 86a, 86b zu der Handbetätigungseinrichtung 62 hin gezogen, um die Verriegelungseinrichtungen 61 zu betätigen.

Die Seile 86a, 86b sind an ihren von der Handbetätigungseinrichtung 62 entfernten Enden zugfest mit einem Verdrängerorgan 90 verbunden, das bei einer Zugbetätigung der Seile 86a, 87a das jeweilige Verriegelungselement 65 beziehungsweise dessen vorderes Halte- oder Rastende aus der Verriegelungsaufnahme 67 verdrängt. Das Verdrängerorgan 90 umfasst einen Schwenkhebel 91, der an einem Schwenklager 92 schwenkbar gelagert ist. Die Seile 86a, 86b sind an einem Betätigungsarm 93 des Schwenkhebels 91 befestigt, beispielsweise mittels Klemmung oder anhand einer Öse am Betätigungsarm 93. Am vorderen Ende eines Verdrängerarms 94 des Schwenkhebels 91 ist eine Verdrängernase 95 angeordnet, die bei Zugbetätigung des jeweiligen Seils 86a, 86b in Richtung eines Pfeils 96 um das Schwenklager 92 schwenkt und das vordere Ende des Verriegelungselements 65 aus der Verriegelungsaufnahme 67 vierdrängt.

Der Schwenkhebel 91 ist durch eine Feder 97 in eine das Verriegelungselement 65 nicht verdrängende Position vorgespannt. Die Feder 97 wirkt entgegen der Zugrichtung 89. Die Feder 97 ist beispielsweise zwischen den Betätigungsarm 93 und ein Führungsteil 98 gespannt, das am unteren Endbereich 47' des Bügels 48 angeordnet ist. Die Feder 97 gleitet beispielsweise an einer Gleitfläche 101 an einer vom Schwenklager 92 abgewandten Seite des Schwenkhebels 91 entlang.

Die Seile 86a, 86b verlaufen beispielsweise durch einen Führungskanal 99 des Führungsteils 98 hindurch. Aufgrund der Federbelastung durch die Feder 97 wirkt die Handbetätigungseinrichtung 62 nur in einer Entriegelungsrichtung, während beispielsweise durch Loslassen des Betätigungshebels 83 die Verdrängerorgane 90 selbsttätig aus ihrer Verdrängerposition herausbewegt werden, so dass die Verriegelungseinrichtungen 61 die Stützen 30a, 30b beziehungsweise die mit diesen verbundenen Ladegestelle 18 selbsttätig in der Fahrstellung F verriegeln können.

Ein Anlenkpunkt 100 für das jeweilige als Zugseil dienende Seil 86a, 86b sowie die Verdrängernase 95 haben etwa denselben radialen Abstand vom Schwenklager 92. Mithin schwenken also beide Komponenten mit radialem Abstand um eine Schwenkachse des Schwenklagers 92.

Beim Lastenträger 10a ist das Verdrängerorgan 90 in einem Innenraum des freien Endes 47 des Bügels 48 schwenkbar gelagert. Dort befindet sich das Schwenklager 92.

Beim Lastenträger 10b ist das Verdrängerorgan 90 in einem Lagergehäuse 102 geschützt angeordnet, das der zugeordneten Verriegelungseinrichtung 61 gegenüberliegend an der Tragstruktur 19 angeordnet ist. Die Lagergehäuse 102 sind beispielsweise zwischen den hochstehenden Haltearmen 58, die die freien Enden 47 des Bügels 48 lagern, unterhalb der freien Enden 47 angeordnet. Die Seile 86a, 86b sind beispielsweise aus den unten offenen Enden 47 des Bügels 48 heraus- und durch Durchtrittsöffnungen an der Oberseite der Lagergehäuse 102 in diese hineingeführt.

Beim Schwenken der Stütze 30b können die Seile 86a, 86b in Schlitze 103 an den Enden 47 eindringen, so dass die Knickbelastung der Seile 86a, 86b gering ist. Die Flexibilität der Seile 86a, 86b lässt ein Schwenken des Bügels 48 des Lastenträgers 10b ohne weiteres zu.

Die Handbetätigungseinrichtung 62 enthält vorzugsweise eine Markierung 104, die eine korrekte oder eine inkorrekte Verriegelung anzeigt. Die Markierung 104 umfasst beispielsweise einen Farbverlauf am Gehäuse 82, der mit dem Schwenkweg 85 des Betätigungshebels 83 korrespondiert. Bei korrekter Verriegelung ist der Betätigungshebel 83 beispielsweise im Bereich einer grünen Markierung, während er bei nicht korrekter Verriegelung oder Entriegelung im Bereich eines roten Abschnitts der Markierung 104 ist.

Der Schwenkhebel 91 bildet einen Bestandteil eines Umlenkgetriebes 105.

## Patentansprüche

1. Lastenträger für ein Kraftfahrzeug (12), insbesondere einen Personenkraftwagen, mit einem zum Tragen einer Last vorgesehenen Ladegestell (18), das in einer Gebrauchsstellung des Lastenträgers (10a; 10b) nach hinten vor einen Heckbereich des Kraftfahrzeugs (12) vorsteht und einen in einer Gebrauchstellung des Lastenträgers (10a; 10b) im Wesentlichen horizontalen Ladebereich (28) zum Aufladen einer Last bereitstellt, wobei der Lastenträger (10a; 10b) eine in der Gebrauchsstellung (G) im Wesentlichen vertikale Stütze (30a; 30b) zum Halten der Last aufweist, und wobei der Lastenträger (10a; 10b) eine Verriegelungseinrichtung (61) mit mindestens einem Verrieglungselement (65) zum ortsfesten Verriegeln mindestens eines beweglichen Lastenträgerbauteils (45) des Lastenträgers (10a; 10b) aufweist, wobei eine Handbetätigungseinrichtung (62) zum Betätigen der Verriegelungseinrichtung (61) an einem oberen, von dem Ladebereich (28) entfernten Endbereich (63) der Stütze (30a; 30b) angeordnet ist, und wobei der Lastenträger mindestens ein Übertragungsglied (76) zum Übertragen einer Betätigungsbewegung (89) der Handbetätigungseinrichtung (62) auf das Verrieglungselement (65) aufweist, wobei das mindestens eine bewegliche Lastenträgerbauteil (45) die Stütze (30a; 30b) umfasst, **dadurch gekennzeichnet, dass** die Stütze (30a; 30b) durch einen Bügel (48) gebildet ist, dass die Handbetätigungseinrichtung (62) an einem oberen Querabschnitt (71) des Bügels (48), insbesondere dem Ladebereich (28) zugewandt, angeordnet ist, und dass das mindestens eine Übertragungsglied (76) ein biegeflexibles Zugorgan, insbesondere einen Seilzug (78a, 79a; 78b, 79b) oder einen Bowdenzug, umfasst.

2. Lastenträger nach Anspruch 1, **dadurch gekennzeichnet, dass** das mindestens eine bewegliche Lastenträgerbauteil (45) das Ladegestell (18) umfasst, wobei das Ladegestell (18) an einer Tragstruktur (19) zwischen einer für einen Fahrbetrieb des Kraftfahrzeugs (12) vorgesehenen Fahrstellung (F) und einer zum Be- und Entladen des Kraftfahrzeugs (12) oder des Lastenträgers (10a; 10b) vorgesehenen Ladestellung (L) schwenkbar und/oder verschieblich gelagert ist.

3. Lastenträger nach Anspruch 1 oder 2, **dadurch gekennzeichnet, dass** mindestens ein Übertragungsglied (76), insbesondere jedes Übertragungsglied (76), in einem Innenraum, insbesondere einem Innenhohlraum (77), der Stütze (30a; 30b) angeordnet ist.

4. Lastenträger nach einem der vorhergehenden Ansprüche, **dadurch gekennzeichnet, dass** das mindestens eine Übertragungsglied (76) ein Übertragungsgetriebe (80), insbesondere ein Umlenkgetriebe (105) und/oder ein Über- oder Untersetzungsgetriebe, umfasst.

5. Lastenträger nach einem der vorhergehenden Ansprüche, **dadurch gekennzeichnet, dass** das mindestens eine Übertragungsglied (76) ein Verdrängerorgan (90), insbesondere eine Klinke, zum Verdrängen des Verrieglungselements (65) aus einer insbesondere an der Stütze (30a; 30b) angeordneten Verriegelungsaufnahme (67) umfasst.

6. Lastenträger nach einem der vorhergehenden Ansprüche, **dadurch gekennzeichnet, dass** das Verdrängerorgan (90) an einem Verbindungsbereich der Stütze (30a; 30b) mit dem Lastenträger (10a; 10b), insbesondere dem Ladegestell (18), angeordnet ist.

7. Lastenträger nach einem der vorhergehenden Ansprüche, **dadurch gekennzeichnet, dass** das Verrieglungselement (65) in seiner das mindestens eine bewegliche Lastenträgerbauteil (45) verriegelnden Verrieglungsstellung federbelastet ist.

8. Lastenträger nach einem der vorhergehenden Ansprüche, **dadurch gekennzeichnet, dass** die Handbetätigungseinrichtung (62) einen zwischen einer Verrieglungsstellung und einer Freigabestellung schwenkbaren Betätigungshebel (83) umfasst.

9. Lastenträger nach einem der vorhergehenden Ansprüche, **dadurch gekennzeichnet, dass** die Stütze (30a; 30b) mit dem Ladegestell (18) fest oder gelenkig verbunden oder lösbar verbindbar ist, und dass die Stütze (30a; 30b) mittels einer Stützen-Verrieglungseinrichtung (50a, 50b) an dem Lastenträger (10a; 10b), insbesondere dem Ladegestell (18), zumindest in der Gebrauchsstellung (G) verriegelbar ist.

10. Lastenträger nach Anspruch 9, **dadurch gekennzeichnet, dass** die Stütze (30a; 30b) mittels einer Steckverbindung an dem Lastenträger (10a; 10b), insbesondere dem Ladegestell (18), befestigbar ist oder dass die Stütze (30a; 30b) mittels eines Schwenklagers zwischen der Gebrauchsstellung (G) und einer Nichtgebrauchsstellung (N) schwenkbar an dem Lastenträger (10a; 10b), insbesondere dem Ladegestell (18), gelagert ist.

11. Lastenträger nach Anspruch 9 oder 10, **dadurch gekennzeichnet, dass** die Stützen-Verrieglungseinrichtung (50a, 50b) eine Klemmschraube und/oder eine Klemmmutter (60) und/oder einen in seine Verrieglungsstellung federbelasteten Klemmhebel oder Rasthebel (51) umfasst.

12. Lastenträger nach einem der vorhergehenden Ansprüche, **dadurch gekennzeichnet, dass** das mindestens eine bewegliche Lastenträgerbauteil (45) ein an dem Ladegestell (18) beweglich gelagertes oder von dem Ladegestell (18) entfernbares Lasttragteil (29) zum Auflegen der Last umfasst.

13. Lastenträger nach einem der vorhergehenden Ansprüche, **dadurch gekennzeichnet, dass** das Lasttragteil (29) ein Bestandteil einer Schwenkteilanordnung(31) mit mindestens einem Schwenkteil (32) zum Erweitern des Ladebereichs (28) ist, wobei das mindestens eine Schwenkteil (32) mit einem Schwenkteil-Lagerbereich (36) an einem Ladegestell-Lagerbereich (38) des Ladegestells (18) um eine Schwenkachse (34) zwischen einer Gebrauchsstellung (G) und einer Nichtgebrauchsstellung (N) (G) schwenkbeweglich gelagert ist.

14. Lastenträger nach einem der vorhergehenden Ansprüche, **dadurch gekennzeichnet, dass** er eine Befestigungseinrichtung (13) oder Halterung zum lösbaren Anordnen an einer Anhängekupplung (15) des Kraftfahrzeugs (12) aufweist und/oder dass das Ladegestell (18) an dem Kraftfahrzeug (12) zwischen einer nach hinten vor das Kraftfahrzeug (12) vorstehenden Gebrauchsstellung (G) und einer hinter oder unter einer Karosseriekontur (17) des Kraftfahrzeugs (12) verborgenen Nichtgebrauchsstellung (N) schwenkbar und/oder verschieblich gelagert ist.

## Claims

1. Load carrier for a motor vehicle (12), in particular a car, with a loading rack (18) provided for carrying a load which, in a position of use of the load carrier (10a; 10b), extends rearwards beyond a rear section of the motor vehicle (12) and provides, in a position of use of the load carrier (10a; 10b), a substantially horizontal loading area (28) for the loading up of a load, wherein the load carrier (10a; 10b) has a support (30a; 30b), substantially vertical in the position of use (G), for holding the load, and wherein the load carrier (10a; 10b) has a locking device (61) with at least one locking element (65) for the immovable locking of at least one movable load carrier component (45) of the load carrier (10a; 10b), wherein a manual actuation device (62) for actuation of the locking device (61) is located on an upper end section (63) of the support (30a; 30b) away from the loading area (28), and wherein the load carrier has at least one transmission element (76) for transmitting an actuating movement (89) of the manual actuation device (62) to the locking element (65), wherein the movable load carrier component or components (45) include the support (30a; 30b), **characterised in that** the support (30a; 30b) is formed by a bracket (48), that the manual actuation device (62) is located on an upper cross-section (71) of the bracket (48), in particular facing the loading area (28), and that the transmission element or elements (76) is or are a flexible towing organ, in particular a cable (78a, 79a; 78b, 79b) or a control cable.

2. Load carrier according to claim 1, **characterised in that** the movable load carrier component or components (45) include the loading rack (18), wherein the loading rack (18) is mounted pivotably and/or slidably on a support structure (19) between a running position (F) provided for operation of the motor vehicle (12) and a loading position (L) provided for loading and unloading of the motor vehicle (12) or the load carrier (10a; 10b).

3. Load carrier according to claim 1 or 2, **characterised in that** at least one transmission element (76), in particular each transmission element (76), is located in an internal space, in particular an internal hollow space (77), of the support (30a; 30b).

4. Load carrier according to any of the preceding claims, **characterised in that** the transmission element or elements (76) includes or include a transmission gear (80), in particular a corner gear (105) or a step-up or step-down gear.

5. Load carrier according to any of the preceding claims, **characterised in that** the transmission element or elements (76) includes or include a displacer organ (90), in particular a latch, for displacing the locking element (65) from a locking location (67), in particular provided on the support (30a; 30b).

6. Load carrier according to any of the preceding claims, **characterised in that** the the displacer organ (90) is located on an area connecting the support (30a; 30b) to the load carrier (10a; 10b), in particular the loading rack (18).

7. Load carrier according to any of the preceding claims, **characterised in that** the locking element (65) is spring-loaded in its locking position which locks the movable load carrier component or components (45).

8. Load carrier according to any of the preceding claims, **characterised in that** the manual actuation device (62) includes an operating lever (83) which is pivotable between a locking position and a release position.

9. Load carrier according to any of the preceding claims, **characterised in that** the support (30a; 30b) is firmly connected or hinged or may be connected releasably to the loading rack (18), and that the support (30a; 30b) may be locked by means of a support locking device (50a, 50b) to the load carrier (10a; 10b), in particular to the loading rack (18), at least in the position of use (G).

10. Load carrier according to claim 9, **characterised in that** the support (30a; 30b) may be fastened to the load carrier (10a; 10b), in particular to the loading rack (18), by means of a plug connection, or that the support (30a; 30b) is mounted on the load carrier (10a; 10b), in particular the loading rack (18), by means of a swivel bearing so as to be pivotable between the position of use (G) and an inoperative position (N).

11. Load carrier according to claim 9 or 10, **characterised in that** the support locking device (50a, 50b) includes a clamping screw and/or a clamping nut (60) and/or a clamping lever or latching lever (51), spring-loaded in its locking position.

12. Load carrier according to any of the preceding claims, **characterised in that** the movable load carrier component or components (45) includes or include a load carrying part (29) for placing the load and which is movably mounted on the loading rack (18) or removable from the loading rack (18).

13. Load carrier according to any of the preceding claims, **characterised in that** the load carrying part (29) is an integral part of a swivel part assembly (31) with at least one swivel part (32) for extending the loading area (28), wherein the swivel part or parts (32) is or are mounted by a swivel part bearing zone (36) on a loading rack bearing zone (38) of the loading rack (18), capable of swivelling around a swivel axis (34) between a position of use (G) and an inoperative position (N).

14. Load carrier according to any of the preceding claims, **characterised in that** it has a fastening device (13) or holder for releasable attachment to a trailer coupling (15) of the motor vehicle (12) and/or that the loading rack (18) is mounted on the motor vehicle (12) with the ability to swivel and/or slide between a position of use (G) extending to the rear beyond the motor vehicle (12) and an inoperative position (N) concealed behind or beneath a vehicle body contour (17) of the motor vehicle (12).

## Revendications

1. Support de charge pour un véhicule automobile (12), en particulier une voiture de tourisme, avec un bâti de charge (18) prévu pour porter une charge, qui dépasse dans une position d'utilisation du support de charge (10a ; 10b) vers l'arrière d'une zone arrière du véhicule automobile (12) et met à disposition une zone de charge (28) sensiblement horizontale dans une position d'utilisation du support de charge (10a ; 10b) pour charger une charge, dans lequel le support de charge (10a ; 10b) présente un appui (30a; 30b) sensiblement vertical dans la position d'utilisation (G) pour le maintien de la charge, et dans lequel le support de charge (10a ; 10b) présente un dispositif de verrouillage (61) avec au moins un élément de verrouillage (65) pour le verrouillage fixe au moins d'un composant de support de charge (45) mobile du support de charge (10a ; 10b), dans lequel un dispositif d'actionnement manuel (62) pour l'actionnement du dispositif de verrouillage (61) est agencé sur une zone d'extrémité (63) supérieure éloignée de la zone de charge (28) de l'appui (30a ; 30b), et dans lequel le support de charge présente au moins un organe de transmission (76) pour la transmission d'un mouvement d'actionnement (89) du dispositif d'actionnement manuel (62) sur l'élément de verrouillage (65), dans lequel l'au moins un composant de support de charge (45) mobile comporte l'appui (30a ; 30b), **caractérisé en ce que** l'appui (30a ; 30b) est formé par un étrier (48), **en ce que** le dispositif d'actionnement manuel (62) est agencé sur une section transversale supérieure (71) de l'étrier (48), en particulier tourné vers la zone de charge (28), et **en ce qu'**au moins un organe de transmission (76) comporte un organe de traction souple et flexible, en particulier un câble de traction (78a, 79a ; 78b, 79b) ou un câble Bowden.

2. Support de charge selon la revendication 1, **caractérisé en ce que** l'au moins un composant de support de charge (45) mobile comporte le bâti de charge (18), dans lequel le bâti de charge (18) est logé de manière pivotante et/ou mobile sur une structure porteuse (19) entre une position de déplacement (F) prévue pour un mode de déplacement du véhicule automobile (12) et une position de charge (L) prévue pour le chargement et le déchargement du véhicule automobile (12) ou du support de charge (10a ; 10b).

3. Support de charge selon la revendication 1 ou 2, **caractérisé en ce qu'**au moins un organe de transmission (76), en particulier chaque organe de transmission (76) est agencé dans un espace intérieur, en particulier un espace creux intérieur (77) de l'appui (30a ; 30b).

4. Support de charge selon l'une des revendications précédentes, **caractérisé en ce que** l'au moins un organe de transmission (76) comporte un engrenage de transmission (80), en particulier un engrenage de renvoi (105) et/ou un engrenage de multiplication ou réduction.

5. Support de charge selon l'une des revendications précédentes, **caractérisé en ce que** l'au moins un organe de transmission (76) comporte un organe de déplacement (90), en particulier un loquet, pour le déplacement de l'élément de verrouillage (65) d'un logement de verrouillage (67) agencé en particulier sur l'appui (30a ; 30b).

6. Support de charge selon l'une des revendications précédentes, **caractérisé en ce que** l'organe de déplacement (90) est agencé sur une zone de liaison de l'appui (30a ; 30b) avec le support de charge (10a ; 10b), en particulier le bâti de charge (18).

7. Support de charge selon l'une des revendications précédentes, **caractérisé en ce que** l'élément de verrouillage (65) est sollicité par ressort dans sa position de verrouillage verrouillant l'au moins un composant de support de charge (45) mobile.

8. Support de charge selon l'une des revendications précédentes, **caractérisé en ce que** le dispositif d'actionnement manuel (62) comporte un levier d'actionnement (83) pivotant entre une position de verrouillage et une position de libération.

9. Support de charge selon l'une des revendications précédentes, **caractérisé en ce que** l'appui (30a ; 30b) est relié fixement ou par articulation ou peut être relié de manière détachable au bâti de charge (18) et **en ce que** l'appui (30a ; 30b) peut être verrouillé à l'aide d'un dispositif de verrouillage d'appui (50a, 50b) sur le support de charge (10a ; 10b), en particulier le bâti de charge (18) au moins dans la position d'utilisation (G).

10. Support de charge selon la revendication 9, **caractérisé en ce que** l'appui (30a ; 30b) peut être fixé à l'aide d'une liaison par enfichage sur le support de charge (10a ; 10b), en particulier le bâti de charge (18) ou **en ce que** l'appui (30a ; 30b) est logé à l'aide d'un palier pivotant entre la position d'utilisation (G) et une position de non utilisation (N) de manière pivotante sur le support de charge (10a ; 10b), en particulier le bâti de charge (18).

11. Support de charge selon la revendication 9 ou 10, **caractérisé en ce que** le dispositif de verrouillage d'appui (50a, 50b) comporte une vis de serrage et/ou un écrou de serrage (60) et/ou un levier de serrage ou un levier d'encliquetage (51) sollicité par ressort dans sa position de verrouillage.

12. Support de charge selon l'une des revendications précédentes, **caractérisé en ce que** l'au moins un composant de support de charge mobile (45) comporte une partie de support de charge (29) logée de manière mobile sur le bâti de charge (18) ou retirable du bâti de charge (18) pour la pose de la charge.

13. Support de charge selon l'une des revendications précédentes, **caractérisé en ce que** la partie de support de charge (29) est un constituant d'un agencement de partie de pivotement (31) avec au moins une partie de pivotement (32) pour l'élargissement de la zone de charge (28), dans lequel l'au moins une partie de pivotement (32) est logée de manière mobile en pivotement avec une zone de palier de partie de pivotement (36) sur une zone de palier de bâti de charge (38) du bâti de charge (18) autour d'un axe de pivotement (34) entre une position d'utilisation (G) et une position de non utilisation (N) (G).

14. Support de charge selon l'une des revendications précédentes, **caractérisé en ce qu'**il présente un dispositif de fixation (13) ou un support pour l'agencement détachable sur un attelage (15) du véhicule automobile (12) et/ou **en ce que** le bâti de charge (18) est logé de manière pivotante et/ou mobile sur le véhicule automobile (12) entre une position d'utilisation (G) dépassant vers l'arrière du véhicule automobile (12) et une position de non utilisation (N) dissimulée sous un contour de carrosserie (17) du véhicule automobile (12).
